# EUROPEAN PATENT APPLICATION

(11) **EP 3 505 658 A1**
(43) Date of publication of application: **03.07.2019**
(21) Application number: 17843850.3
(22) Date of filing: 09.08.2017
(51) Int. Cl.: C25F 7/00, C25F 1/04, H01M 8/0202

(54) **VERTICAL ELECTROLYTIC DEVICE**

(30) Priority: 23.08.2016 KR 20160107163
(71) Applicant: POSCO, Pohang-si, Gyeongsangbuk-do 37859 (KR)
(72) Inventor: CHUNG, Won-Cheol, Pohang-si Gyeongsangbuk-do 37877 (KR); KIM, Jong-Hee, Pohang-si Gyeongsangbuk-do 37877 (KR); KIM, Kwang-Min, Pohang-si Gyeongsangbuk-do 37877 (KR); SEO, Bo-Sung, Pohang-si Gyeongsangbuk-do 37877 (KR)
(74) Representative: Potter Clarkson
(86) International application number: PCT/KR2017/008646
(87) International publication number: WO 2018/038430

(57) **Abstract**

An embodiment of the present invention relates to a vertical electrolytic device having an improved structure to easily discharge bubbles generated during an electrolysis process that is used for surface modification of a separator of a fuel cell or the like. The vertical electrolytic device according to an aspect of the present invention includes an electrolytic bath in which an electrolyte is stored and an opening is formed in top and bottom portions thereof to allow vertical movement of a strip, wherein the bottom opening is formed to correspond with the strip to prevent discharge of the electrolyte stored in the electrolytic bath; and at least one pair of electrode parts disposed in the electrolytic bath so as to be facing each other on each side of the strip.

## Description

### [Technical Field]

The present disclosure relates to a vertical electrolytic device used for a surface reforming process of a separator of a fuel cell or the like.

### [Background Art]

In general, fuel cells are environmentally-friendly power generation systems that generate electricity and thermal energy through an electrochemical reaction between hydrogen and oxygen, and are often provided in a stack structure in which several tens to several hundreds of layers of fuel cell units, each of which generates about 1 V, are stacked.

Such fuel cells may be used in various fields, and recently, they have been developed and used as a source of automotive fuel.

A fuel cell unit is an assembly of electrodes and an electrolyte, including an anode supplying hydrogen ions, a cathode supplying oxygen, and an electrolyte exchanging hydrogen ions between the anode and the cathode.

To stack such fuel cell units, separators are placed between the fuel cell units, and such separators may be used to isolate hydrogen and oxygen, to electrically connect the fuel cell units, and to maintain hardness of the stack.

Such separators need to have high electrical conductivity and high corrosion resistance. Therefore, stainless steel-based metal separators are typically used, and in particular, STS316-based steel plates, gold-plated for conductivity, are often used.

However, conventional separators have become costly due to such a gold plating process. To address this problem, a surface reforming technique using passive film removal, which does not require a gold plating process and is cost-effective, has been developed for securing high conductivity.

Particularly, the surface reforming technique using passive film removal refers to a process of passing a stainless steel surface, after removing an oxide layer formed thereon through electrolysis using sulfuric acid, through a solution containing nitric acid and hydrofluoric acid (mixed acids) to regenerate a conductive film. This technique may be used to secure a degree of conductivity comparable to the gold plating process.

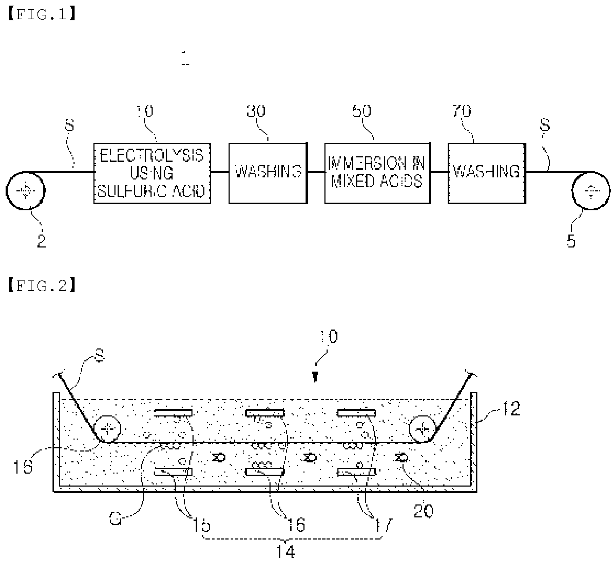

FIG.1 is a block diagram illustrating a surface reforming process for a general separator of a fuel cell. To produce a separator of a fuel cell that requires conductivity, a surface reforming apparatus 1 needs to continuously supply a strip S that forms the body of the separator, and to this end, includes winders 2 and 5 (POR: pay off roll, TR: tension reel) for unwinding and winding the strip S.

Also, the surface reforming apparatus 1 passes the continuously supplied strip S through an electrolytic device 10, a washing device 30, a mixed acid immersion device 50, and a final washing device 70, to impart conductivity to the strip S through each process.

Meanwhile, FIG. 2 is a block diagram illustrating an electrolytic device according to the related art. Referring to FIG. 2, a surface reforming electrolytic device 10 includes an electrolysis bath 12 storing an electrolyte, such as sulfuric acid or the like, and an electrode part 14, including cathodes and anodes alternately disposed, immersed in the electrolyte. The electrode part 14 is disposed vertically with respect to the strip S. Further, an immersion roll 18 is provided in the electrolytic bath 12 for travel of the strip S.

In the electrolytic device 10, while the strip S is passing through the electrode parts 14, hydrogen gas is generated from cathode electrodes 15 and 17, and oxygen gas is generated from the portion of the strip S under the influence of the cathode electrodes 15 and 17. In addition, oxygen gas is generated from the surface of the anode electrode 16, and hydrogen gas is generated from the portion of the strip S under the influence of the anode electrode 16.

As described above, gases G generated from the electrode parts 14 and the portions of the strip S under the influences thereof tend to attach to the electrode parts 14 and the portions of the strip S as bubbles, and such bubbles G may hinder the electrolysis process.

Particularly, although the bubbles G generated in upper portions of the strip S may easily rise and escape therefrom, the bubbles G generated in lower portions of the strip S tend to remain attached to the surface of the lower portions of the strip S and cannot easily escape therefrom.

To solve this problem, the electrolytic device 10 in the related art has had a nozzle part 20 installed in the electrolysis bath to remove the bubbles G attached to the surface of lower portions of the strip S, and uses this nozzle part 20 to remove the bubbles G by spraying the electrolyte under high pressure. However, since the strip S may be moving horizontally, the bubbles G attached to the lower portions of the strip S may only be removed to a limited extent.

### [Disclosure]

### [Technical Problem]

An aspect of the present disclosure is to provide a vertical electrolytic device which easily discharges bubbles generated from an electrolysis process by allowing a strip, used as a separator of a fuel cell or the like, to move vertically during the electrolysis process.

### [Technical Solution]

According to an aspect of the present disclosure, a vertical electrolytic device includes: an electrolytic bath in which an electrolyte is stored, including a top opening and a bottom opening to allow vertical movement of a strip, the bottom opening being formed to correspond to the strip to prevent discharge of the electrolyte stored therein; and at least one pair of electrode parts, disposed to face each other with the strip disposed therebetween inside the electrolytic bath.

In detail, the electrode parts may be disposed in multiple pairs in a vertical direction and may include cathode and anode electrodes alternately disposed in a travel direction of the strip.

In detail, the electrolytic bath may further include at least one pair of nozzle parts configured to spray the electrolyte onto the electrode parts or to the surface of the strip.

Preferably, the nozzle parts may be provided below the electrode parts.

In addition, a main tank provided below the electrolytic bath and configured to store the electrolyte being discharged from the electrolytic bath, and a circulation means for supplying the electrolyte stored in the main tank to the electrolytic bath or to the nozzle parts may be further comprised.

Alternatively, the electrolytic bath may include one or more independent chambers, each of which independently accommodates one pair of electrode parts and one pair of nozzle parts, wherein the independent chamber disposed above may be disposed to allow the electrolyte discharged from a bottom opening thereof to connect to the electrolyte stored in the independent chamber disposed below.

In detail, a lower surface of the independent chamber may be downwardly inclined toward the bottom opening.

In detail, a passage through which bubbles are discharged may be formed between the independent chamber disposed above and the independent chamber disposed below.

In detail, each of the independent chambers may further include an auxiliary tank configured to store an electrolyte overflowing or falling from above, and an auxiliary circulation means for supplying the electrolyte stored inside the auxiliary tank to each of the independent chambers or to the nozzle parts.

### [Advantageous Effects]

As set forth above, according to an exemplary embodiment in the present disclosure, as an electrolysis process takes place while the strip is moving vertically, it may be possible to minimize the attachment of bubbles generated during the electrolysis process to the strip; and to prevent the bubbles from causing defects on the surface of the strip, thus contributing to quality improvement.

### [Description of Drawings]

FIG. 1 is a block diagram illustrating a general surface reforming process of a separator of a fuel cell.
FIG. 2 is a block diagram of an electrolytic device according to the related art.
FIG. 3 is a block diagram of a vertical electrolytic device according to an exemplary embodiment of the present disclosure.
FIG. 4 is a block diagram of a vertical electrolytic device according to another exemplary embodiment of the present disclosure.
FIG. 5 is a block diagram of a vertical electrolytic device according to another exemplary embodiment of the present disclosure.
FIG. 6 is a block diagram of a vertical electrolytic device according to another exemplary embodiment of the present disclosure.

### [Best Mode for Invention]

An exemplary embodiment of the present disclosure will be described in greater detail in conjunction with the attached drawings. The exemplary embodiments of the present disclosure may be modified in various forms, and the scope of the present disclosure is not limited to the exemplary embodiments described herein. In the drawings, the shapes and sizes of elements may be exaggerated for increased clarity, and like reference numerals may designate like elements throughout the specification and drawings.

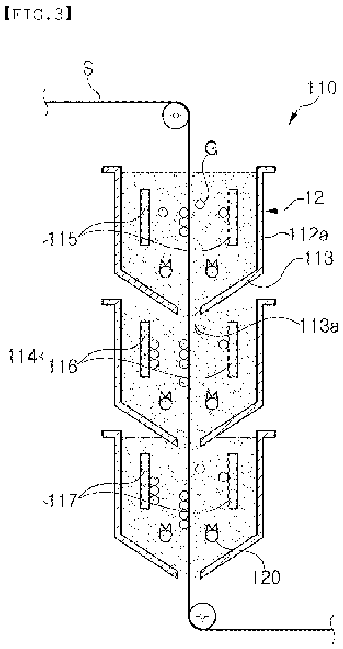

FIG. 3 is a block diagram illustrating a vertical electrolytic device according to an exemplary embodiment of the present disclosure.

Referring to FIG. 3, a vertical electrolytic device 110 according to the present exemplary embodiment may be used for a surface reforming process in the manufacturing of a separator of a fuel cell or the like, and in particular, may be configured to perform electrolysis while a strip used for surface reforming is vertically passing therethrough.

The vertical electrolytic device 110 may include an electrolyte bath 112 to which a strip S can be supplied vertically, and configured to keep the strip S immersed in an electrolyte while moving. In addition, the electrolyte bath 112 may have openings formed in top and bottom portions to allow vertical movement of the strip.

In the present exemplary embodiment, the strip S may be supplied from the top portion to the bottom portion; however, the direction in which the strip S can be supplied is not limited thereto. Alternatively, the strip S may be supplied from the bottom portion to the top portion.

In present exemplary embodiment, the strip S is disclosed as being supplied from the top portion to the bottom portion. Such a structure, even when bubbles are generated from the surface of the strip S during the electrolysis process, serves to keep the bubbles, rising in a direction opposite to a travel direction of the strip S, from easily attaching to the strip S.

In the present exemplary embodiment, as the strip S is supplied from the top portion to the bottom portion, a top opening and a bottom opening of the electrolyte bath 112 may serve as an inlet and an outlet, respectively.

Preferably, the top portion of the electrolyte bath 112 may include a cover (not illustrated) to keep foreign materials from entering, wherein the cover can be opened, and includes a gas discharge hole for discharge of gas and an inlet through which the strip S can be introduced.

The vertically supplied strip S may be discharged from the bottom portion of the electrolyte bath 112, and to this end, an outlet 116 through which the strip S can be discharged may be formed on a lower surface 113 of the electrolyte bath 112. Preferably, the outlet 116 formed on the lower surface 113 of the electrolyte bath 112 may have a minimal size allowing discharge of the strip S, to control the electrolyte level, and for example, may be formed in the shape of a slot elongated in a width direction of the strip S.

The electrolyte bath 112 may contain at least one pair of electrode parts 114 disposed to face each other with the vertically moving strip S disposed therebetween.

For example, the electrode parts 114 may be disposed in multiple pairs along a vertical direction, and for example, cathode and anode electrodes may be alternately disposed in a travel direction of the strip S.

Preferably, in the present exemplary embodiment, the electrode parts 114 may be a cathode electrode 115, an anode electrode 116, and a cathode electrode 117, sequentially disposed in a travel direction of the strip S.

In the vertical electrolytic device 110, while the strip S is passing through each of the electrode parts 114, hydrogen gas may be generated from the cathode electrodes 115 and 117, and oxygen gas may be generated from a portion of the strip S under the influence of the cathode electrodes 115 and 117. Also, oxygen gas may be generated from the surfaces of the anode electrodes 116, and hydrogen gas may be generated from a portion of the strip S under the influence of the anode electrodes 116.

In the present exemplary embodiment, due to vertical movement of the strip S, each of bubbles G generated by the electrode parts 114 may rise to the top portion due to buoyancy or the like, and may be discharged.

Preferably, in the electrolyte bath 112, at least one pair of nozzle parts 120 configured to spray the electrolyte onto the electrode parts 114 or to the surface of the strip S may be further installed to allow the bubbles G generated from the hydrolysis process to easily detach from the electrode parts 114 or the strip S, and to allow the electrode parts 114 or the strip S to come into contact with the electrolyte more easily.

The electrolyte may be supplied to the electrolyte bath 112 through a separate electrolyte supplying means. Alternatively, the electrolyte may be supplied through a nozzle.

According to the present exemplary embodiment, the electrolyte chamber 112 may be formed by a single chamber, and a plurality of electrode parts 114 and nozzle parts 120 may be installed therein, however, the electrolyte chamber 112 may be modified to have various forms to improve performance thereof.

For example, the electrolyte bath 112 may include at least one or more independent chambers 112a, each of which independently accommodates one pair of electrode parts 114 and one pair of nozzle parts 120.

Such electrolyte baths 112 may be provided such that the electrolyte discharged from the outlet 116 formed on the bottom portion of the independent chamber 112a disposed above can connect with the electrolyte stored in another independent chamber 112a disposed below.

In particular, one pair of electrode parts 114 and one pair of nozzle parts 120 may be independently provided in each of the independent chambers 112a, and the electrolyte discharged from the outlet 116 of one independent chamber 112a disposed above, by being continuously discharged, may be electrically connected to the electrolyte stored in another independent chamber 112a disposed below.

Preferably, in the present exemplary embodiment, three such independent chambers 112a may be provided, and one pairs of electrode parts 114 provided to the three independent chambers 112a may be cathode electrodes 115, anode electrodes 116, and cathode electrodes 117, sequentially disposed in a travel direction of the strip S.

In particular, the lower surface 113 of each independent chamber 112a may be inclined downwardly toward the outlet 116.

The lower surface 113 of one independent chamber 112a disposed above may prevent from entering, the bubbles G generated from an electrolysis process in another independent chamber 112a disposed below.

Also, the bubbles G generated from the electrolysis process in the independent chamber 112a disposed below may be externally discharged along the lower surface 113 of the independent chamber 112a disposed above, and the bubbles G may be discharged through a passage formed between the independent chamber 112a disposed above and the independent chamber 112a disposed below.

Preferably, the lower surface 113 of the independent chamber 112a disposed above may be positioned below the level of electrolyte stored in the independent chamber 112a disposed below. Accordingly, the electrolyte being discharged from the independent chamber 112a disposed above may remain connected to the electrolyte in the independent chamber 112a disposed below.

Also, each of the independent chambers 112a, when vertically disposed, may have a gap formed by the inclined lower surface thereof that serves as a passage, and through this gap, the bubbles G generated and rising from the independent chamber 112a disposed below may be discharged.

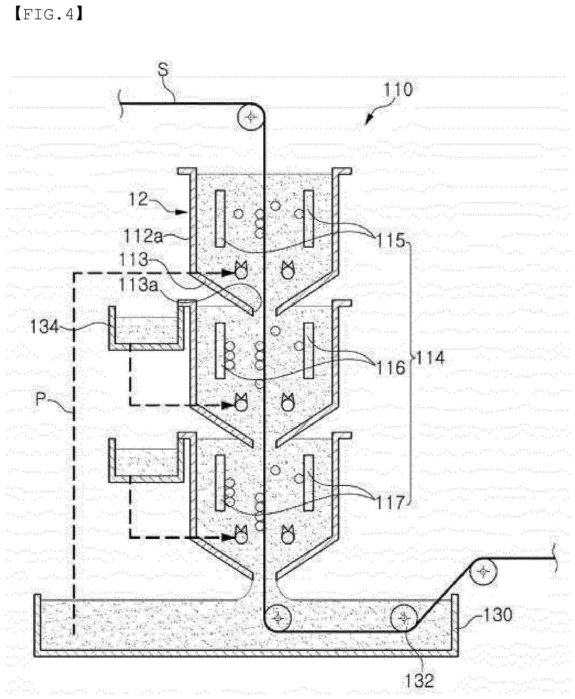

FIG. 4 is a block diagram of a vertical electrolytic device according to another exemplary embodiment of the present disclosure.

Referring to FIG. 4, a vertical electrolytic device 110 in the present exemplary embodiment may be configured to recirculate and thereby continuously supply an electrolyte discharged from electrolysis baths 112.

To this end, below the electrolysis baths 112, a main tank 130 in which the electrolyte discharged from the electrolysis baths 112 is stored may be installed, and a circulation means for supplying the electrolyte stored in the main tank 130 back to the electrolysis baths 112 or nozzle parts may be further provided.

In particular, the circulation means may include a pipe connecting the main tank 130 with the electrolysis bath 112 or the nozzle parts, and a pump and a valve for supplying the electrolyte to the pipe.

In addition, the main tank 130 may include a plurality of immersion rolls 132 immersed in the electrolyte and configured to switch a supply direction of a strip S.

In addition, each independent chamber 112a may have the electrolyte overflowing through an open top portion of, and the electrolyte overflowing from another independent chamber 112a disposed above may fall thereto.

As described above, the electrolyte overflowing from each independent chamber 112a, after being collected into the main tank 130, may be supplied back to each independent chamber 112a or to the nozzle parts through the circulation means, and may be sprayed through the nozzle parts and recirculated.

The circulation means may include a pipe P connecting the independent chambers 112a or the nozzle parts 120, and a pump and a valve (not illustrated) for supplying the electrolyte to this pipe P.

Preferably, each independent chamber 112a may be provided with an auxiliary tank 134 for storing the electrolyte overflowing or falling from above. Such an auxiliary tank 134 may be formed at an upper edge of the independent chamber 112a, and may supply the electrolyte stored in the auxiliary tank 134 to another independent chamber 112a or nozzle parts 120 disposed below.

To this end, the auxiliary tank 134 may be provided with an auxiliary circulation means for supplying the electrolyte stored therein to each independent chamber 112a or to the nozzle parts 120. The auxiliary circulation means may be provided in the same structure as the circulation means, and may include, for example, a pipe P connecting the auxiliary tank 134 to the electrolysis bath 112 or the nozzle parts 120, and a pump and a valve for supplying the electrolyte to this pipe P.

Preferably, the circulation means provided in the main tank 130 may be configured to supply the electrolyte to the independent chamber 112a disposed uppermost and nozzle parts 120 installed therein, and the circulation means provided in the auxiliary tank 134 may be configured to supply the electrolyte to another independent chamber 112a disposed below the independent chamber 112a disposed uppermost, and nozzle parts 120 installed therein.

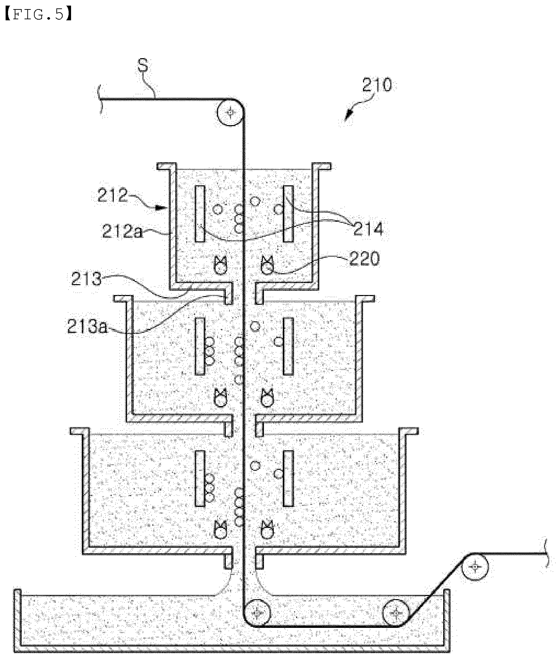

FIG. 5 is a block diagram illustrating a vertical electrolytic device 210 according to another exemplary embodiment of the present disclosure. In this exemplary embodiment, the electrolysis baths 212, which are individual independent chambers 212a, are illustrated as being vertically arranged and having lower surfaces that are downwardly inclined; however, the shape and the arrangement of such independent chambers 212a are not limited thereto.

For example, in this exemplary embodiment, the independent chamber 212 may have lower surfaces 213 that are flat.

In addition, the independent chamber 212a may have an outlet 213a formed on the lower surface 213 thereof. In particular, the outlet 213a may extend downwardly from the lower surface 213 to a predetermined height. Such an outlet 213a may prevent the bubbles G discharged from another independent chamber 212a disposed below from entering the independent chamber 212a disposed above.

In addition, the independent chamber 212a disposed below may be formed to have a width larger than a lower width of the independent chamber 212a disposed above. For example, an upper perimeter of the independent chamber 212a disposed below may be wider than a lower perimeter of the independent chamber 212a disposed above. Accordingly, the electrolyte overflowing from the independent chamber 212a disposed above may be collected into the independent chamber 212a disposed below.

Further, each independent chamber 212a of the electrolytic device 210 may include one pair of electrode parts 214, and nozzle parts 220 configured to spray the electrolyte onto the electrode parts 214 or the surface of the strip S.

In the electrolytic device 210 having above configuration, the strip S can be electrolyzed in each independent chamber 212a, and the strip S, travelling vertically during this process, may prevent the bubbles G from attaching to the electrode parts 214 and the surface of the strip S. Even when some bubbles G are attached to the electrode parts 214 and the surface of the strip S, the electrolyte sprayed from the nozzle parts 220 may effectively cause the some bubbles G to detach therefrom.

Further, the bubbles G discharged and rising from the independent chamber 212a disposed below may be prevented from entering the independent chamber 212a disposed above by the lower surface 213 of the independent chamber 212a disposed above and a stepped portion 214a raised around the outlet 116 of the lower surface 213 of the independent chamber 212a disposed above . Such bubbles G may be discharged externally through an open passage created as the perimeter of the independent chamber 212a disposed above is formed to be larger than the perimeter of the independent chamber 212a disposed above.

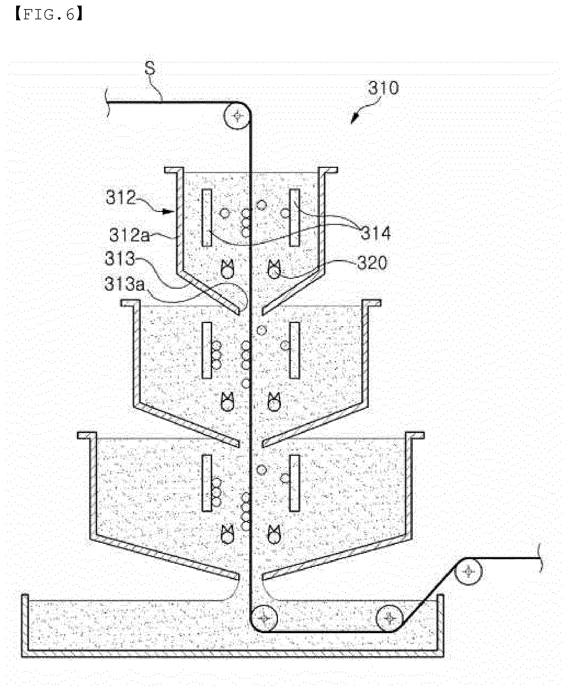

FIG. 6 is a block diagram illustrating a vertical electrolytic device 310 according to another exemplary embodiment of the present disclosure. In this exemplary embodiment, a lower surface 313 of each independent chamber 312a, the electrolysis bath 312, may be downwardly inclined toward an outlet 313a, and the independent chamber 312a disposed below may be formed wider than a lower width of the independent chamber 312a disposed above.

In this structure, even without having an auxiliary tank 334 installed at the edge of the independent chamber 312a, the electrolyte overflowing from the independent chamber 312a disposed above may be collected into the independent chamber 312a disposed below.

Further, each independent chamber 312a of the electrolytic device 310 may include one pair of electrode parts 314, and nozzle parts 320 configured to spray the electrolyte onto the electrode parts 314 or to the surface of the strip S.

In the electrolytic device 310 having the above configuration, the strip S can be electrolyzed in each independent chamber 312a, and the strip S, travelling vertically during this process, may prevent the bubbles G from attaching to the electrode parts 314 and the surface of the strip S. Even when some bubbles G are attached to the electrode parts 314 and the surface of the strip S, the electrolyte sprayed from the nozzle parts 320 may effectively cause the some bubbles G to detach therefrom.

Furthermore, the bubbles G discharged and rising from the independent chamber 312a disposed below may rise and move outwardly along the inclined lower surface 313 of the independent chamber 312a disposed above, thus not entering the independent chamber 312a disposed above. In addition, such bubbles G may be discharged externally through an open passage created as the perimeter of the independent chamber 312a is formed to be larger than the perimeter of the independent chamber disposed above.

The exemplary embodiments and the attached drawings should not be construed as limiting the scope of the present disclosure, and it will be apparent to those skilled in the art that alternatives, modifications, and variation can be made without departing from the scope of the present disclosure as defined by the appended claims.

## Claims

1. A vertical electrolytic device comprising:
an electrolysis bath configured to store an electrolyte therein, and including openings formed in top and bottom portions thereof to allow vertical travel of a strip, wherein the opening formed in the bottom portion is formed to correspond to the strip to prevent discharge of the electrolyte stored therein; and
at least one pair of electrode parts, disposed facing each other with the strip disposed therebetweeen inside the electrolysis bath.

2. The vertical electrolytic device of claim 1, wherein the electrode parts are disposed in multiple pairs along a vertical direction, the electrode parts including cathode and anode electrodes alternately disposed in a travel direction of the strip.

3. The vertical electrolytic device of claim 1, wherein the electrolysis bath further includes at least one pair of nozzle parts spraying the electrolyte to the electrode parts or to a surface of the strip.

4. The vertical electrolytic device of claim 1, wherein the nozzle parts are provided below the electrode parts.

5. The vertical electrolytic device of claim 3, further comprising:
a main tank provided below the electrolysis bath and in which the electrolyte discharged from the electrolysis bath is stored; and
a circulation means for supplying the electrolyte stored in the main tank to the electrolysis bath or to the nozzle parts.

6. The vertical electrolytic device of any one of claims 1 to 5, wherein the electrolysis bath includes at least one independent chamber in which one pair of electrode parts and one pair of nozzle parts are independently received, wherein the independent chamber disposed above is provided to allow the electrolyte discharged from an opening of a bottom portion thereof to connect with the electrolyte stored in the independent chamber disposed below.

7. The vertical electrolytic device of claim 6, wherein a lower surface of the independent chamber is downwardly inclined toward the opening in the bottom portion.

8. The vertical electrolytic device of claim 6, wherein a passage through which bubbles are discharged is formed between the independent chamber disposed above and the independent chamber disposed below.

9. The vertical electrolytic device of claim 6, wherein each of the independent chambers further includes an auxiliary tank storing the electrolyte overflowing or falling from the above, and an auxiliary circulation means for supplying the electrolyte stored in the auxiliary tank to each of the independent chambers or to the nozzle parts.
